# EUROPÄISCHE PATENTSCHRIFT

(11) **EP 1 493 764 B1**
(45) Veröffentlichungstag und Bekanntmachung des Hinweises auf die Patenterteilung: **15.04.2009**
(21) Anmeldenummer: 04014548.4
(22) Anmeldetag: 22.06.2004
(51) Int. Cl.: C08G 18/67, C08G 18/08, C08G 18/32

(54) **Verfahren zur lösemittelfreien Herstellung ethylenisch ungesättiger Polyurethane**
Solvent-free process for the production of ethylenically unsaturated polyurethanes
Procédé sans solvant de préparation des polyuréthanes insaturés éthyléniquement

(30) Priorität: 03.07.2003 DE 10330029; 14.07.2003 DE 10331672
(43) Veröffentlichungstag der Anmeldung: 05.01.2005
(73) Patentinhaber: Bayer MaterialScience AG, 51368 Leverkusen (DE)
(72) Erfinder: Weikard, Jan, Dr., 51519 Odenthal (DE); Fäcke, Thomas, Dr., Bridgeville, PA 15017 (US); Sanders, Josef, Dr., 51375 Leverkusen (DE); Wamprecht, Christian, Dr., 41472 Neuss (DE)

(56) Entgegenhaltungen:
- EP-A- 0 367 445
- EP-A- 1 336 629
- WO-A-99/16806
- WO-A-03/044111

## Beschreibung

Die Erfindung betrifft ein Verfahren zur lösemittelfreien Herstellung ethylenisch ungesättigter Polyurethane.

Ethylenisch ungesättigte Polyurethane werden beispielsweise als Rohstoffe für die Erzeugung von pulverförmigen Beschichtungsmitteln, die unter dem Einfluss aktinischer Strahlung härten, verwendet.

Die DE-A 19 947 522 offenbart polymerisierbare Polyurethane auf Basis linearer Diisocyanate und ihre Verwendung. Die Herstellung dieser Verbindungen erfolgt in drei Schritten. In einem ersten Schritt wird eine olefinisch ungesättigte Verbindung mit einer isocyanatreaktiven Gruppe mit einem Überschuss an Diisocyanat umgesetzt. Im Anschluss wird der Überschuss an Diisocyanat durch Destillation entfernt, und es wird mit einer weiteren difunktionellen isocyanatreaktiven Verbindung umgesetzt. Diese Umsetzung erfolgt in einem Lösungsmittel. Diese Vorgehensweise hat den Nachteil, dass zum einen im zweiten Schritt ein vergleichsweise hochsiedendes Diisocyanat aus einem Gemisch mit einer thermisch labilen, olefinisch ungesättigten Verbindung destilliert werden muss und zum anderen das Endprodukt in einem Lösungsmittel anfällt, welches abschließend unter hohem Aufwand entfernt werden muss. Die Herstellung in einem kontinuierlichen Verfahren wird weder erwähnt noch kann das beschriebener Verfahren kontinuierlich durchgeführt werden.

Die EP-A 1 078 943 beschreibt die lösemittelfreie Herstellung (Meth)acryloylgruppen aufweisen-der Polyurethane durch Umsetzung von Polyisocyanaten mit Hydroxyverbindungen, die teilweise (Meth)acryloylgruppen aufweisen:
A) Ein Mono- oder Diisocyanat mit 4 bis 20 Kohlenstoffatomen und
B) eine Di- und/oder Polyisocyanat-Komponente, die mindestens ein Di- oder Polyisocyanat enthält
   werden mit
C) einem Mono-Hydroxyalkyl(meth)acrylat mit 2 bis 12 Kohlenstoffen in der Alkylkette,
D) einer (Meth)acryloylgruppen aufweisenden Alkoholkomponente, bestehend aus mindestens einem (Meth)acryloylgruppen aufweisenden Alkohol und
E) einer (Meth)acryloylgruppen-freien gegenüber Isocyanaten di- oder polyfunktionell reaktionsfähigen Verbindung
umgesetzt,
wobei die Stoffmenge C) (mol OH-Gruppen) der Stoffmenge A) (mol NCO-Gruppen) entspricht und wobei die Summe der Stoffmenge von D) (mol gegenüber Isocyanaten reaktionsfähigen Gruppen) und E) (mol gegenüber Isocyanaten reaktionsfähigen Gruppen) der Stoffmenge B) (mol NCO-Gruppen) entspricht und wobei der Massenanteil von A) und C) zusammen - bezogen auf die Gesamtmasse an (Meth)Acryloylgruppen aufweisenden Oligo- und Polyurethanen - 10 bis 95 % beträgt.

Diese Umsetzung erfolgt in einem oder mehreren Reaktionsschritten in einem diskontinuierlichen Verfahren. Die Möglichkeit, die Umsetzung auch in einem einstufigen, kontinuierlichen Verfahren durchzuführen, wird ebenfalls offenbart. Die im Prinzip gleichen Möglichkeiten offenbart auch W003/044111. Nachteilig bei dem einstufigen, kontinuierlichen Verfahren ist das Fehlen der Möglichkeit, das Polyurethan schrittweise und daher kontrolliert aufzubauen. Beide Verfahrensvarianten haben den Nachteil der zwangsläufigen Anwesenheit von niedermolekularem Produkt aus der Umsetzung der Komponenten A und C miteinander. Derartige niedermolekulare Produkte neigen zur Kristallisation, was in Oberflächenbeschichtungen unerwünscht ist. Es ist zwar möglich, diesen unerwünschten Effekt durch eine angepaßte Auswahl der Komponente C zu verhindern, indem man z.B. Mischungen verschiedener Mono-Hydroxyalkyl(meth)acrylate einsetzt, also solche mit unterschiedlichen, ggf. verzweigten Alkylketten, die nur eine geringe Kristllisationsneigung aufweisen. Dies ist jedoch mit einem erhöhten Aufwand verbunden und verteuert daher die erhaltenen Produkte.

Aufgabe der vorliegenden Erfindung war es daher, ein Verfahren bereitzustellen, mit dem sowohl die lösemittelfreie Herstellung von ethylenisch ungesättigten Polyurethanen als auch ein kontrollierter mehrstufiger Polymeraufbau' unter Vermeidung der oben beschriebenen Nachteile, insbesondere der Anwesenheit zur Kristallisation neigender niedermolekularer Bestandteile, möglich ist.

Gegenstand der Erfindung ist daher ein Verfahren zur lösemittelfreien Herstellung von ethylenisch ungesättigten Polyurethanen, dadurch gekennzeichnet, dass zunächst ein Präpolymer in einer diskontinuierlich geführten Reaktion aus einer isocyanathaltigen Komponente A) und einer isocyanatreaktiven Komponente B) hergestellt und anschließend in einer zweiten kontinuierlich geführten Reaktion mit einer Komponente C) zum Polyurethan umgesetzt wird, wobei mindestens eine der Komponenten A, B oder C ethylenisch ungesättigte Gruppen aufweist.

Präpolymere im Sinne der Erfindung sind monomere, oligomere oder polymere Verbindungen sowie deren Mischungen, die durch Bildung mindestens einer Urethan oder Thiourethan- oder Harnstoffgruppe entstehen und weiterhin geeignete chemische Funktionen, wie z. B. Isocyanat-oder Hydroxylgruppen, aufweisen, die einen weiteren Polymeraufbau durch Zugabe von Monomeren mit chemisch korrespondierenden Funktionen im Sinne einer Additionsreaktion ermöglichen.

Kontinuierliche Reaktionen im Sinne der Erfindung sind solche, bei denen der Zulauf der Edukte in den Reaktor und der Austrag der Produkte aus dem Reaktor gleichzeitig aber räumlich getrennt stattfinden, während bei diskontinuierlicher Reaktion die Reaktionsfolge Zulauf der Edukte, chemische Umsetzung und Austrag der Produkte zeitlich nacheinander ablaufen.

Zur Herstellung des Präpolymeren wird die isocyanathaltige Komponente A) mit der isocyanatreaktiven Komponente B) umgesetzt.

Die Komponente A) enthält mindestens ein organisches Mono-, Di- oder Polyisocyanat, welches aliphatisch, araliphatisch oder aromatisch sein kann: 3-Methacryloylpropylisocyanat, Cyclohexylisocyanat, n-Butylisocyanat, Phenylisocyanat, Toluolylisocyanat, 1,4-Tetramethylendiisocyanat, 1,6-Hexamethylendiisocyanat (HDI), 1,8-Octamethylendiisocyanat, 1,11-Undecamethylendiisocyanat, 1,12-Dodekamethylendiisocyanat, 2,2,4 bzw. 2,4,4-Trimethyl-1 1,16-hexamethylendiisocyanat (TMDI), 1,3- und 1,4-Cyclohexandiisocyanat, 1-Isocyanato-3-Isocyanatomethyl-3,5,5-trimethylcyclohexan (IPDI), 1-Isocyanato-1-methyl-4(3)-isocyanatomethylcyclohexan (IMCI), 1,4-Pheny-, lendiisocyanat, 1,5-Naphtylendiisocyanat, 1-Isocyanato-2-isocyanatomethylcyclopentan, (4,4'-und/oder 2,4'-) Diisocyanatodicyclohexylmethan (H12-MDI), Xylylendiisocyanat (XDI), Bis-(4-Isocyanato-3-methylcyclohexyl)-methan, 1,3- und/oder 1,4-Hexahydroxylylendiisocyanat (H6-XDI),α,α,α'.α'-Tetramethyl-1,3- und/oder -1,4-xylylendiisocyanat (TMXDI), 2,4- und/oder 2,6-Hexahydrotoluylendiisocyanat (H6-TDI), 2,4- und/oder 2,6-Toluoldiisocyanat (TDI), 4,4'und/oder 2,4'- Diphenylmethandiisocyanat (MDI) oder deren Derivate mit Urethan-, Isocyanurat-, Allophanat-, Biuret-, Uretdion-, Carbodiimid-, Oxadiazintrion- und/oder Iminooxadiazindionstruktureinheiten, solange sie mindestens eine freie NCO-Gruppe besitzen sowie deren Mischungen. Bevorzugt sind IPDI, TDI, H12-MDI, H6-XDI und die Uretdione von IPDI und H12-MDI sowie deren Mischungen. Besonders bevorzugt ist IPDI.

Komponente B) enthält mindestens eine isocyanatreaktive Verbindung, solche enthalten zum Beispiel Hydroxyl-, Thiol-, primäre und/oder sekundäre Aminogruppen. Bevorzugt sind Alkohole, besonders bevorzugt sind solche Alkohole, die ethylenisch ungesättigte Gruppen aufweisen und unter diesen insbesondere solche einer Hydroxylfunktionalität von 1.

Geeignete Alkohole sind zum Beispiel monofunktionelle aliphatische, araliphatische und aromatische Alkohole wie Methanol, Ethanol, N-Propanol, Isopropanol, Butanol, Hexanol, Fettalkohole, Phenole etc. sowie insbesondere Hydroxyalkyl(meth)acrylate mit 2 bis 12 Kohlenstoffatomen in der Alkylkette, vorzugsweise 2 bis 4 ,Kohlenstoffatomen im Hydroxyalkylrest wie Hydroxyethyl(meth)-acrylat, 2- und 3-Hydroxypropyl(meth)acrylat und 2-, 3- und 4-Hydroxybutyl(meth)-acrylat, weiterhin 1,4-Cyclohexandimethanolmonoacrylat, OH-funktionelle Vinylether, wie z.B. Hydroxybutylvinylether sowie deren Mischungen. Ebenfalls können Alkohole aus der Umsetzung von epoxyfunktionellen (Meth)acrylsäurester mit (Meth)Acrylsäure verwendet werden. So ergibt die Umsetzung von Glycidylmethacrylat mit Acrylsäure einen gemischten Acrylsäure-Methacrylsäureester des Glycerins, der ebenfalls vorteilhaft verwendet werden kann. Bevorzugt sind Hydroxyethylacrylat und die isomeren Hydroxypropylacrylate.

Geeignete aliphatische, araliphatische und aromatische Diole oder Polyole sind zum Beispiel 1,2-Ethandiol, 1,2- und 1,3-Propandiol, die isomeren Butandiole, Neopentylglycol, 1,6-Hexandiol, 2-Methylpropandiol-1,3, 2,2,4-Trimethylpentandiol-1,3, 2-n-Butyl-2=ethylpropandiol-1,3, Glycerinmonoalkanoate (wie z.B. die Glycerinmonostearate), Dimerfettalkohole, Diethylenglycol, Triethylenglycol, Tetraethylenglycol, 1,4-Dimethylolcyclohexan, Dodekandiol, Bisphenol-A, hydriertes Bisphenol A, Hexandiol-1,3, Oktandiol-1,3, Dekandiol-1,3, 3-Methylpentandiol-1,5, 3,3-Dimethylbutandiol-1,2, 2-Methyl-pentandiol-1,3, 2-Methyl-pentandiol-2,4, 3-Hydroxymethyl-heptanol-4, 2-Hydroxymethyl-2,3-dimethylpentanol-1, Glycerin, Trimethylolethan, Trimethylolpropan, Trimerfettalkohole, isomere Hexantriole, Sorbit, Pentaerythrit, Ditrimethylolpropan, Dipentaerythrit, Diglycerin, Tricyclodekandiol (TCD). Bevorzugt sind 1,2-Ethandiol, 1,2- und 1,3-Propandiol, die isomeren Butandiole, Neopen-tylglycol, 1,6-Hexandiol, 2-Ethylhexandiol-1,3, Perhydrobisphenol, 4,8-Bis-(hydro-xymethyl)-tricyclo[5.2.0(2.6)]-dekan (TCD-Alkohol). Besonders bevorzugt sind 1,2-Ethandiol, 1,2-Propandiol und 1,4-Butandiol.

Ebenfalls einsetzbar sind OH-funktionelle Ester mit einem mittlerem Mw <2000, bevorzugt Mw <500, die durch Umsetzung der oben genannten Polyole mit ε-Capro-lacton gewonnen werden. Anwendung finden auch ungesättigte Ester, die neben den genannten Alkoholen aus ungesättigte Säuren oder Alkoholen bestehen wie: Maleinsäure(anhydrid), Fumarsäure, Itaconsäure, Citraconsäure(anhydrid), Aconitsäure, Tetrahydrophthalsäure(anhydrid), 3,6-Endomethylen-1,2,3,6-tetrahydrophthalsäure(anhydrid), Butendiole.

Es kommen auch (Meth)acryloylgruppen aufweisende Alkohole und Amine oder im wesentlichen aus diesen bestehenden Umsetzungsprodukte in Betracht, die durch Kondensation von n-wertigen Alkoholen oder Aminen oder Aminoalkoholen mit (Meth)Acrylsäure erhalten werden, wobei,als Alkohole, Amine oder Aminoalkoholen auch Gemische eingesetzt werden können. Zu diesen Verbindungen bzw. Produktgemischen gehören beispielsweise die Umsetzungsprodukte von Glycerin, Trimethylolpropan und/oder Pentaerythrit, von niedermolekularen Alkoxylierungsprodukten derartiger Alkohole, wie beispielsweise ethoxylierten oder propoxylierten Trimethylolpropan mit (Meth)Acrylsäure.

In Kombination mit einem Alkohol lassen sich auch folgende Amine verwenden, wobei anteilig Harnstoffgruppen entstehen: Ethanolamin, N-Methylethanolamin, N-Ethylethanolamin, 2-Aminopropanol-1, Tetramethylxylylenediamin, Ethylendiamin, 1,6-Hexamethylendiamin, Isophorondiamin (IPDA); (4,4'- und/oder 2,4'-)Diamino-dicyclohexylmethan, (4,4'- und/oder 2,4'-)Diamino-3,3'-dimethyldicyclohexylmethan.

Die Umsetzung der Komponenten A) und B) erfolgt diskontinuierlich beispielsweise in einem Rührkessel mit Heizung/Kühlung, Temperaturmessung und Dosiereinrichtungen. Die Umsetzung selbst erfolgt unter dem Fachmann aus der Urethanchemie bekannten Bedingungen. Vorteilhaft wird eine Komponente bei 20 bis 120, bevorzugt 30 bis 60°C vorgelegt. Anschließend wird unter Rühren die zweite Komponente zudosiert, wobei die Temperatur durch die Reaktionswärme sowie ggf. durch Schmelz- oder Lösevorgänge beeinflusst wird und durch Heizen oder Kühlen geregelt werden kann. Der Verlauf der Umsetzung wird verfolgt, wobei als Kenngrößen der Isocyanatgehalt, der Hydroxylgehalt, die Viskosität und/oder spektroskopische Größen z.B. durch Infrarotoder Nahinfrarotspektroskopie erhältlich, verwendet werden können. Die Messungen können an der Reaktionsmischung entnommen Proben oder durch entsprechende Messeinrichtungen im Reaktor durchgeführt werden.

Die zum Urethan führende Additionsreaktion kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Es ist bekannt, dass die Umsetzung von Diisocyanaten mit unterschiedlich reaktiven Isocyanatgruppen wie z.B. IPDI mit Alkoholen durch geeignete Katalysatoren wie z.B. Dibutylzinndilaurat bei Temperaturen unter 100°C, bevorzugt unter 65°C mit erhöhter Selektivität durchgeführt werden kann.

Enthalten die Komponenten A) oder B) ethylenisch ungesättigte Bestandteile ist es vorteilhaft, durch Zugabe geeigneter Inhibitoren bzw. Antioxidantien wie beispielsweise Phenole und/oder Hydrochinone und/oder stabiler N-Oxylradikale und/oder Phenothiazin oder anderer Radikalfänger in Mengen von jeweils 0,0005 bis 0,3 Gew.-% bezogen auf die Gestamtmasse an A) und B) vor vorzeitiger und unerwünschter radikalischer Polymerisation zu schützen. Der Zusatz dieser Hilfsmittel kann vor, gleichzeitig und/oder im Anschluss an Umsetzung erfolgen.

Das Equivalentverhältnis von A) zu B) wird bevorzugt so gewählt, dass entweder die Isocyanat-Gruppen oder die isocyanat-reaktiven Gruppen im Überschuß vorliegen. Vorteilhaft weist das Präpolymer daher NCO-Gehalte von größer 3,0, bevorzugt größer 5,0 Gew.-% im Falle des Isocyanatüberschuss, oder im Falle eines Überschuss an Hydroxylgruppen Hydroxylgehalte von größer 3,0, bevorzugt 5,0 Gew.-% auf. Besonders bevorzugt sind Präpolymere mit Isocyanatüberschuss und einem NCO-Gehalt größer 10,0 Gew.-%.

Bevorzugt sind solche Präpolymere, die eine dynamische Viskosität unter 10.000 mPa·s bei 23°C aufweisen und daher noch mit üblichen Pumpen im Temperaturbereich von 20 bis 80°C gefördert werden können. Besonders bevorzugt sind solche Präpolymere, die eine dynamische Viskosität unter 1.000 mPa·s bei 60°C aufweisen. Die Viskosität der Präpolymere ist insbesondere von deren Molekulargewicht sowie deren Urethangruppendichte abhängig, so dass eine Vergrößerung des Überschusses einer Komponente im Allgemeinen zur Erniedrigung der Viskosität des Präpolymeren führt.

An die Herstellung des Präpolymeren schließt sich die kontinuierliche Umsetzung zum Polyurethan an. Dabei ist es unerheblich, ob das Präpolymer unmittelbar nach Herstellung weiter umgesetzt oder zunächst gelagert oder gegebenenfalls in eine andere Anlage transportiert wird.

Die Komponente C) enthält mit dem Präpolymeren im Sinne einer zum Urethan führenden (Poly)Addition reaktive Gruppen. Die mittlere Funktionalität von C) an diesen Gruppen liegt zwischen 1,3 und 4, bevorzugt zwischen 1,8 und 2,4. Die Equivalentverhältnisse werden so gewählt, dass das Verhältnis von Isocyanat-reaktiven Gruppen zu Isocyanatgruppen zwischen 0,8 und 3,0. bevorzugt 0,9 und 3,0, insbesondere 0,9 und 2,5 und ganz besonders bevorzugt zwischen 0,95 und 2,20 liegt.

Als Bestandteile der Komponente C) kommen insbesondere entweder die unter A) oder die unter B) genannten Verbindungen in Frage. Weiterhin können dem Präpolymer oder der Komponente C) die oben genannten Stabilisatoren und/oder Katalysatoren zugesetzt werden.

Zusätzlich können dem Präpolymer oder der Komponente C) die in der Chemie strahlenhärtender Bindemittel dem Fachmann bekannten Reaktivverdünner (siehe "Chemistry & Technology of UV & EB Formulations for Coatings, Inks & Paints", Vol. 2, P K T Oldring (Ed.), SITA Technology, London, England, S. 250-290, 1991) zugesetzt werden. Diese Reaktivverdünner besitzen in der Regel neben den strahlenhärtbaren Funktionalitäten keine weiteren funktionellen Gruppen. Allerdings ist es möglich, auch solche Verbindungen einzusetzen, die noch Säure-, Epoxy-, Silyl-, Phosphin-, Phosphat-, Harnstoff-, Isocyanurat-, Uretdion, Biuret- oder andere Gruppen enthalten, insbesondere wenn hierdurch weitere vorteilhafte Effekte wie z.B. eine bessere Haftung im Lackierprozess erreicht werden.

Beispiele für Reaktivverdünner sind (Meth)acrylsäure und ihre Ester, Vinyl(meth) acrylat, Allyl(meth)acrylat, Trimethylolpropantriallylether, Glycerintri(meth)acrylat, Trimethylolpropantri(meth)acrylat, Pentaerythrittetra(meth)acrylat, und Dipentaery-thrithexa(meth)acrylat, Styrol, Divinylbenzol, Vinyltoluol, Isobornyl(meth)acrylat, Butoxyethyl(meth)acrylat Alkylenglycoldi(meth)acrylate wie Ethylen-, Propylengly-coldi(meth)acrylate, Polyalkylenglycoldi(meth)acrylate wie Polyethylen-, Polypropylenglycoldi(meth)acrylate, Di(meth)acrylate einfacher Diole wie z. B. Butandioldi (meth)acrylat, Hexandioldi(meth)acrylat, Cyclohexandimethanoldi(meth)acrylat, Dicyclopentyl(meth)acrylat. Bevorzugt sind Hexandioldiacrylat, Isobomylmethacrylat, Isodecylmethacrylat, Tricyclodekandimethyloldimethacrylat, Tripropylenglycoldi-acrylat, und die (meth)-acrylierten Produkte von ggf. ethoxylierten oder propoxylierten Diolen oder Polyolen wie z.B. Trimethylolpropan, Pentaerythrit, Bisphenol A oder Cyclohexandimethanol.

Auch Gemische aus den vorgenannten Verbindungen können verwendet werden. Bevorzugt sind Trimethyolpropantrimethacrylat und/oder Trimethyolpropantriacrylat. Der Anteil an Reaktivverdünner beträgt üblicherweise unter 60 Gew.-% bezogen auf das Polyurethan, bevorzugt werden weniger als 30 Gew.-% zugefügt und besonders bevorzugt wird auf den Einsatz von Reaktivverdünner verzichtet.

Die Umsetzung des Präpolymers mit der Komponente C) findet kontinuierlich statt. Dabei werden die beiden Bestandteile durch einen Reaktor gefördert. Die Stoffströme werden gegebenenfalls zunächst getrennt erwärmt, anschließend miteinander in Kontakt gebracht und innig miteinander vermischt. Der vereinigte, gemischte Stoffstrom wird weiterhin gegebenenfalls geheizt oder gekühlt und nach einer gewissen Reaktionstrecke abgekühlt und gegebenenfalls konfektioniert.

Präpolymer und Komponente C) gegebenfalls unter Zusatz der genannten Stabilisatoren, Katalysatoren oder Reaktivverdünner werden vorteilhaft aus getrennten Vorlagen durch den Reaktor gefördert. Das Fördern der Stoffströme durch den Reaktor kann durch Schwerkraft, Gasdruck und/oder vorteilhaft durch Pumpen erfolgen. Als Pumpen eignen sich alle bekannten Typen, die zur Förderung von Material der entsprechenden Viskosität geeignet sind. Werden ethylenisch ungesättigte Bestandteile mit Pumpen gefördert, ist es zweckmäßig, solche Pumpentypen zu verwenden, die das Material einer möglichst geringen Scherung aussetzen, um eine ungewollte Polymerisation der ethylenisch ungesättigten Bestandteile zu verhindern. Neben Zahnradpumpen eignen sich insbesondere Kolbenmembranpumpen. Es ist vorteilhaft, die Materialien auf der Eduktseite des Reaktors zu pumpen, da die Edukte eine niedrigere Viskosität als das Produkt aufweisen. Vorteilhaft werden die beiden Stoffströme der Edukte in ihren Mengen durch geeignete Mess- und Regeleinrichtungen gesteuert, die die Einstellung eines exakten Verhältnis der Volumina oder der Massen der beiden Stoffströme erlauben. Vorteilhaft werden beide Stoffströme jeweils durch einen Wärmetauscher auf eine Temperatur von 20 bis 170, bevorzugt 40 bis 120, besonders bevorzugt 50 bis 100°C erwärmt. Anschließend werden sie vermischt und durch den Reaktor, der gff. weitere Mischelemente enthält, gefördert. Als Reaktoren eignen sich z.B. statische Mischer, Düsen und Extruder, wobei auch mehrere gleiche oder verschiedene dieser Reaktoren hintereinander geschaltet werden können. Jeder dieser Reaktoren ist vorteilhaft mit einer Kühl- oder Heizvorrichtung z.B. einem Mantel, durch den eine temperierte Wärmeträgerflüssigkeit geleitet wird, versehen. Die Verwendung mehrerer unabhängig temperierbarer Heiz-/Kühlzonen ermöglicht es zum Beispiel, das strömende Reaktionsgemisch zu Beginn der Reaktion, also kurz nach dem Vermischen, zu kühlen und freiwerdende Reaktionswärme abzuführen und gegen Ende der Reaktion, also kurz vor dem Austrag aus dem Reaktor, zu heizen, um einen möglichst vollständigen Umsatz zu erreichen. Die Kühl- und Heizmitteltemperatur kann dabei zwischen -25 und +250°C, bevorzugt unter 200°C liegen. Die Temperatur des Reaktionsgemischs wird neben Heizung und/oder Kühlung auch durch die Reaktionswärme beeinflusst. Bei Anwesenheit von ethylenisch ungesättigten Verbindungen ist es zweckmäßig, bestimmte Temperaturobergrenzen nicht zu überschreiten, weil sonst das Risiko einer ungewollten Polymerisation steigt. Für ungesättigte Acrylate sollte die maximale Reaktionstemperatur Werte von 250°C nicht übersteigen. Bevorzugt werden 200°C nicht überschritten.

Je höher die maximale Reaktionstemperatur, desto kürzer sollte die Verweilzeit sein. In der Regel haben die Reaktionspartner in der Reaktionszone Verweilzeiten zwischen 20 s und 30 min, bevorzugt zwischen 30 s und 10 min, ganz besonders bevorzugt zwischen 1 und 6 min. Die Verweilzeit kann beispielsweise durch die Volumenströme und das Volumen der Reaktionszone gesteuert werden. Der Reaktionsverlauf wird vorteilhaft durch verschiedene Messeinrichtungen verfolgt. Dazu geeignet sind insbesondere Einrichtungen zur Messung der Temperatur, der Viskosität, der Wärmeleitfähigkeit und/oder des Brechungsindex in strömenden Medien und/oder zur Messung von Infrarot- und/oder Nahinfrarotspektren.

Gegen Ende der Reaktionstrecke können gegebenenfalls weitere erwünschte und in der Beschichtungstechnologie übliche Additive zugeführt und eingemischt werden. Vorzugsweise werden die Additive jedoch schon einer Reaktionskomponente vor der eigentlichen Reaktion zugesetzt. Solche Additive sind Fotoinitiatoren, thermische Initiatoren, Inhibitoren, Lichtschtzmittel wie UV-Absorber und sterisch gehinderte Amine (HALS), weiterhin Antioxidantien, Füllstoffe sowie Lackhilfsmittel, z.B. Antiabsetzmittel, Entlüftungsmittel und/oder Netzmittel, Verlaufsmittel, Reaktiwerdünner, Weichmacher, Katalysatoren sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996.

Das am Ende des Reaktors kontinuierlich anfallende Produkt kann sofort abgefüllt werden, bevorzugt wird es jedoch unter seine Glastemperatur abgekühlt und mechanisch zerkleinert. Dies kann beispielsweise dadurch geschehen, dass das Produkt auf ein Kühlband fließt, auf dem es erstarrt, und anschließend durch einen Häcksler zerkleinert wird. Das grob zerkleinerte Produkt kann unmittelbar anschließend oder später mit den in der Technologie der Pulverlacke üblichen Methoden weiterverarbeitet werden. Das resultierende Polyurethan hat eine Glasübergangstemperatur von - 150 bis +150°C, bevorzugt jedoch von 35 bis 80°C. Die Viskosität liegt zwischen 10 und 100 000 Pa·s bei 100°C, bevorzugt 100 und 1 000 Pa·s bei 100°C. Diese Glasübergangstemperatur und auch die Viskosität ist durch geeignete Auswahl der Einsatzstoffe und deren relativer Einsatzmengen einstellbar. Das genaue Verfahren ist in WO03/044111 beschrieben.

Die durch das erfindungsgemäße Verfahren erhaltenen ethylenisch ungesättigten Poly-urethane stellen wertvolle Bindemittel für Pulverlacke dar. Sie können ohne weitere Zusätze als thermisch vernetzbare Pulver-Klarlacke verarbeitet werden (in welchem Fall das Bindemittel mit dem Überzugsmittel identisch wäre) oder, vorzugsweise, mit den in der Lacktechnologie üblichen Hilfs- und Zusatzmitteln, wie beispielsweise Pigmenten, wie z.B. Titandioxid, Verlaufsmitteln, wie z.B. Polybutylacrylat oder Siliconen, Entlüftungsmitteln wie z.B. Benzoin, Triboadditiven wie z.B. aliphatischen Aminen und/oder anderen Zusatzstoffen versehen und z.B. auf Extrudern oder Knetern bei Temperaturen von 40 bis 140°C, vorzugsweise 70 bis 120°C, homogenisiert werden.

Der anfallende Feststoff wird dann in an sich in bekannter Weise gemahlen und durch Sieben von groben Kornanteilen, vorzugsweise zumindest von solchen mit einer oberhalb 0,1 mm liegenden Korngröße, befreit.

Die erfindungsgemäß hergestellten pulverförmigen Überzugsmittel können nach üblichen Pulverauftragsverfahren, wie z.B. elektrostatischem Pulversprühen, triboelektrischem Auftrag oder Wirbelsintern auf die zu überziehenden Substrate aufgebracht werden. Die Überzüge werden dann zunächst durch Einwirkung von Hitze (z. B. durch IR-Strahler, Konvektion oder deren Kombination) geschmolzen, es bildet sich ein klarer Film, sofern keine Pigmente o. ä. eingearbeitet wurden. Die Temperatur liegt dabei üblicherweise über 50°C, vorzugsweise über 70°C, besonders bevorzugt über 90°C. Die Härtung der Überzüge kann entweder durch Erhitzen auf 130 bis 220°C, vorzugsweise 150 bis 190°C, und/oder durch die Einwirkung von energiereicher Strahlung wie UV-oder Elektronenstrahlung erfolgen. Elektronenstrahlung wird, wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV & EB Formulations for Coatings, Inks & Paints", Vol. 1, P K T Oldring (Ed.), SITA Technology, London, England, S. 101-157, 1991 im Detail beschrieben. Zur Elektronenstrahlhärtung benötigt man keinen Fotoinitiator.

Im Falle der Vernetzung mittels UV-Strahlung werden in die Überzugsmassen Fotoinitiatoren homogen eingearbeitet. Als Fotoinitiatoren sind die üblicherweise eingesetzten Verbindungen geeignet, wenn sie die Pulvereigenschaften wie Rieselfähigkeit und Lagerfähigkeit nicht negativ beeinflussen, was durch orientierende Vorversuche zu ermitteln ist. Beispiele für Fotoinitiatoren sind 1-Hydroxy-cyclohexylphenylketon, Benzildimethylketal oder, bei pigmentierten Systemen, 2-Methyl-1-(4-(methythio)phenyl-2-morpholino-propanon-1 oder Trimethylbenzoyldiphenylphosphinoxid.

Die Fotoinitiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden. Derartige Initiatorgemische sind kommerziell verfügbar (z.B. Ciba Spezialitätenchemie GmbH).

Im Falle einer thermischen Härtung kann diese auch unter Zusatz von thermisch zerfallenden Radikalbildnern erfolgen. Geeignet sind, wie dem Fachmann bekannt ist, z.B. Peroxyverbindungen wie tert.-Butylperbenzoat, Ammoniumperoxodisulfat, Kaliumperoxodisulfat, oder auch Azoverbindungen wie 2,2'-Azobis[N-(2-propenyl)-2-methylpropionamid], 1-[(cyano-1-methylethyl)azo]-formamid, 2,2'-Azobis(N-butyl-2-methylpropionamid), 2,2'-Azobis(N-cyclohexyl-2-methylpropionamid), 2,2'-Azobis{2-methyl-N-[2-(1-hydroxybutyl)]propionamid), 2,2'-Azobis{2-methyl-N-[2-(1-hydroxybutyl)]propionamid, 2,2'-Azobis {2-methyl-N-[ 1, 1-bis(hydroxymethyl)-2-hydroxyethyl]propionamid. Besonders geeignet sind Initiatoren in fester Form mit einem Schmelzpunkt unter 130°C und einer Halbwertszeit im Minutenbereich bei einer Zersetzungstemperatur oberhalb von 100°C.

Die erfindungsgemäßen Bindemittel für Pulverlacke eignen sich zur Beschichtung von Substraten aus Holz, Metall, Kunststoff, Glas, Textilien, mineralischen Stoffen und/oder bereits beschichteten Substraten hieraus oder von Substraten hieraus, die aus beliebigen Kombinationen der genannten Materialen bestehen. Insbesondere seien hier Anwendungen in der Industrielackierung von MDF-Platten, vormontierten höherwertigen Gütern, die bereits temperaturempfindliche Baugruppen enthalten wie z.B. elektronischen Baugruppen, aber auch die Lackierung von Möbeln, Coils, Gegenständen des täglichen Lebens, Automobilkarossen und deren Anbauteile genannt.

Die erfindungsgemäßen Urethanacrylate können dabei auch in Kombination miteinander oder mit anderen in der Pulverlackchemie üblichen Bindemitteln gemeinsam verwendet werden; wie z.B. mit Polyestern, Polyacrylaten, Polyethern, Polyamiden, Polycarbonaten, die auch gegebenenfalls ungesättigte Gruppen enthalten können. Geeignete ungesättigte Gruppen sind Acrylat-, Methacrylat-, Fumarat-, Maleinat-, Vinyl- und/oder Vinylethergruppen. Bevorzugt sind Acrylat- und Methacrylatgruppen. Die Mengenverhältnisse werden dahingehend bestimmt, dass die Doppelbindungsdichte der resultierenden Mischung nicht 1,0 Mol Doppelbindungen pro Kilogramm unterschreitet, weil dann keine ausreichende Härtung mehr möglich ist. Die erfindungsgemäßen Bindemittel können auch als Klebstoffe und Dichtungsmassen verwendet werden. Voraussetzung hierbei ist es im Falle der UV-Stahlenhärtung, dass mindestens eines der beiden zu verklebenden oder miteinander abzudichtenden Substrate für UV-Strahlung durchlässig, also transparent sein muß. Bei der Elektronenstrahlung ist auf eine hinreichende Durchlässigkeit für Elektronen zu achten. Geeignete Substrate bestehen aus Holz, Metall, Kunststoff, Glas, Textilien, mineralischen Stoffen und/oder bereits beschichteten Substraten bzw. Mischung aus diesen Substraten.

Die erfindungsgemäßen Bindemittel eigenen sich auch als Härtmassen in Form-, Spritz- und Druckgussverfahren. Dabei wird ein zu beschichtendes Objekt in eine Form eingebracht, wobei noch ein Abstand von maximal 1 cm, bevorzugt kleiner 0,3 cm zwischen Objektoberfläche und Form verbleibt. Das erfindungsgemäße Bindemittel wird nun über einen Extruder in die Form verpresst und anschließend thermisch und/oder mittels Strahlung gehärtet.

### Beispiele:

### Beispiel 1:

### Herstellung eines Präpolymeren

In einem 3l-Glaskolben mit mechanischem Rührer, Gaseinleitung und Thermometer wurden unter Durchleiten von Luft (3 l pro Stunde) 1344,1 g Isophorondiisocyanat (Desmodur® I, Bayer AG, Leverkusen, DE), 0,50 g Dibutylzinndilaurat (Desmorapid® Z, Bayer AG, Leverkusen, DE), 1,00 g 4-Toluolsulfonsäuremethylester, 1,00 g 2,6-Di-tert.-butyl-4-methylphenol eingewogen, verrührt und auf 50°C aufgeheizt.

Anschließend wurden 653,4 g 2-Hydroxypropylacrylat (Bisomer® HPA, Interorgana Chemikalienhandel GmbH, Köln, DE) so zudosiert, dass mit der stark exothermen Reaktion 55 bis 60°C erreicht wurden. Unter Kühlung des Kolbens mit einem Eisbad wurden dazu 3 h benötigt. Anschließend wurde 30 min bei 60°C nachgerührt, bis der NCO-Gehalt kleiner oder gleich 14,9 % (Theorie 14,9 %) betrug.

| | |
|---|---|
| Viskosität Rotationsviskosimeter Haake VT 550, MV-DIN Becher / 23°C / Schergefälle 40 s⁻¹ | 4400 mPa·s |
| Isocyanatgehalt [Gew.-% NCO], Rücktitration mit HCl gegen Bromphenolblau nach Versetzen mit Überschuß an Butylamin, Grundlage DIN 53185/10: (Theorie 14,9 %) | 14,8 % |
| GPC nach Polystyrolstandard (Mₙ/M_{w}/D) | 386/433/1,12 |
| Peak-Flächen [%] von Gesamt | 16,0 % |
| IPDI | 69,8 % |
| Monourethan | 12,2 % |
| Diurethan | |

### Beispiel 2:

### Kontinuierliche Herstellung eines ethylenisch ungesättigten Polyurethans

Die Herstellung des ungesättigten Polyurethans erfolgte in einer Versuchsanlage mit folgendem Aufbau:

Zwei beheizbare Vorlagegefäße mit je 50 1 Inhalt, zwei Dosierpumpen, zwei Durchflußmesser zur Überwachung der Dosierströme, zwei Wärmetauscher zum Beheizen der Dosierströme, ein Reaktionsrohr von 280 mm Länge und 20 mm Durchmesser und ein anschließendes Reaktionsrohr von 1000 mm Länge und 40 mm Durchmesser. Die Reaktionsrohre enthalten geeignete Mischkörper und sind mit Wärmeträgerflüssigkeit beheiz- und kühlbar.

In einer solchen Statikmischeranlage, wird eine Mischung, bestehend aus dem Präpolymer gemäß Beispiel 1 und 1000 ppm Dibutylzinndilaurat aus, dem 1. Vorlagegefäß und 1,2-Ethandiol aus dem 2. Vorlagegefäß kontinuierlich in den statischen Mischer dosiert. Am Reaktoraustritt wird das Reaktionsprodukt kontinuierlich abgeführt, abgekühlt und dann mechanisch zerkleinert. Folgende Reaktionsbedingungen wurden eingehalten:

| | |
|---|---|
| Dosierstrom Präpolymermischung: | 11,595 kg/h |
| Dosierstom Ethandiol: | 1,264 kg/h |
| Wärmetauscher Präpolymermischung: | 80°C |
| Wärmetauscher Ethandiol: | 80°C |
| Reaktoreintrittstemperatur Präpolymermischung und Ethandiol: | 80°C |
| Reaktionsstrecke 1: | 130°C |
| Reaktionsstrecke 2: | 125°C |
| Reaktoraustrittstemperatur: | 150°C |

Unter diesen Bedingungen wird ein erfindungsgemäßes ungesättigtes Urethan mit den folgenden Kenndaten erhalten: Die Glasübergangstemperatur betrug 49,8°C, die komplexe Schmelzviskosität bei 100°C war 208 Pa·s, der Rest-NCO-Gehalt 0,6 % und der Gehalt an freiem Hydroxypropylacrylat lag bei < 0,01 %.

### Beispiel 3:

### Vergleich: Einstufige, diskontinuierliche Herstellung eines ethylenisch ungesättigten Polyurethans der gleichen Bruttozusammensetzung (WO 03/044111, Beispiel 3)

In einem Planschlifftopf wurden 2425,70 g Desmodur® I [1-Isocyanato-3-Isocyänatomethyl-3,5,5-trimethylcyclohexan (IPDI)] (Bayer AG, Leverkusen, DE) vorgelegt und bei 90°C 1,60 g 2,5-Ditert.-butylhydrochinon, 4,00 g 2,6-Di-tert.-butyl-4-methyl-phenol, 2,00 g Desmorapid® Z (Dibutylzinndilaurat) (Bayer AG, Leverkusen, DE) und 4,00 g p-Methoxyphenol gelöst. Nun wurde unter Wärmeentwicklung eine Mischung aus 1179,24 g Hydroxypropylacrylat und 383,46 g 1,2-Ethandiol innerhalb von 3 h zudosiert, die Temperatur wurde dabei bei 90°C gehalten. Mit zunehmender Viskosität der Harzschmelze wurde bis auf 116°C erwärmt. Nach 1,5 h Rühren wurde ein NCO-Gehalt 0,05 Gew.-% erreicht. Die erhaltene Schmelze wurde in eine Aluschale überführt und erkalten gelassen. Die Glastemperatur des amorphen, glasharten, spröden Produkts betrug 49,7°C. Die komplexe Schmelzviskosität bei 100°C war 421 Pa·s.

Der Vergleich der nach Beispiel 2 und 3 erhaltenen Produkte zeigt, dass das erfindungsgemäße Verfahren Polymere ergibt, die bei gleicher Bruttozusammensetzung und gleicher Glasübergangstemperatur eine niedrigere Schmelzviskosität bei 100°C aufweisen.

### Beispiel 4:

### Vergleich: Einstufige, kontinuierliche Herstellung eines ethylenisch ungesättigten Polyurethans der gleichen Bruttozusammensetzung

In einer Statikmischeranlage gemäß Beispiel 2 wurden in der Vorlage 1 eine Mischung aus 60,64 Gew.-Teile Desmodur® I [1-Isocyanato=3-Isocyanatomethyl-3,5,5-trimethylcyclohexan (IPDI)], 0,1 Gew.-Teile Desmorapid® Z (Dibutylzinndilaurat), 0,04 Gew.-Teile 2,5-Di-tert.-butyl-hydrochinon, 0,1 Gew.-Teile p-Methoxyphenol und 0,1 Gew.-Teile 2,6-Di-tert.-butyl-4-methylphenol sowie in der Vorlage 2 eine Mischung aus 29,48 Gew-Teilen 2-Hydroxypropylacrylat und 9,59 Gew.-Teilen 1,2-Ethandiol vorgelegt. Diese Mischungen wurden anschließend kontinuiertlich unter Einhaltung folgender unterschiedlicher Reaktionbedingungen in den statischen Mischer dosiert:

### Reaktionsbedingungen 4.1)

| | |
|---|---|
| Dosierstrom Vorlage 1: | 3,238 kg/h |
| Dosierstom Vorlage 2: | 4,970 kg/h |
| Wärmetauscher 1: | 80°C |
| Wärmetauscher 2: | 80°C |
| Reaktoreintrittstemperatur: | 80°C |
| Reaktionsstrecke 1: | 130°C |
| Reaktionsstrecke 2: | 130°C |
| Reaktoraustrittstemperatur: | 142°C |

Es resultierte ein Produkt mit einem Rest-NCO-Gehalt von 1,4 %, einer Glasübergangstemperatur von 42,3°C, einem Restgehalt an freiem IPDI von 0,09 % und einem Gehalt an freiem 2-Hydroxyprolylacrylat von 1,7 %. Während des gesamten Versuchsverlaufs waren starke Druckschwankungen im Reaktor zu beobachten, die eine ruhige kontinuierlich Fahrweise nicht ermöglichten. Der hohe Restgehalt an freiem 2-Hydroxypropylacrylat beeinträchtigt Mensch und Umwelt.

### Reaktionsbedingungen 4.2)

Die Temperaturen der Dosierströme und der Reaktoren wurden reduziert, um eine gleichmäßigere Fahrweise ohne Druckschwankungen zu erzielen.

| | |
|---|---|
| Dosierstrom Vorlage 1: | 3,238 kg/h |
| Dosierstom Vorlage 2: | 4,970 kg/h |
| Wärmetauscher 1: | 70°C |
| Wärmetauscher 2: | 70°C |
| Reaktoreintrittstemperatur: | 70°C |
| Reaktionsstrecke 1: | 70°C |
| Reaktionsstrecke 2: | 70°C |
| Reaktoraustrittstemperatur: | 152°C |

Es resultierte ein Produkt mit einem Rest-NCO-Gehahlt von 1,96 %, einer Glasübergangstemperatur von 39,1°C, einem Restgehalt an freiem IPDI von 0,02 % und einem Gehalt an freiem 2-Hydroxyprolylacrylat von 3,1 %. Während des gesamten Versuchsverlaufs waren trotz reduzierter Reaktionstemperaturen starke Druckschwankungen im Reaktor zu beobachten, die eine ruhige kontinuierlich Fahrweise nicht ermöglichten. Der hohe Restgehalt an freiem 2-Hydroxypropylacrylat beeinträchtigt Mensch und Umwelt.

### Reaktionsbedingungen 4.3)

Die Katalysatormenge an Desmorapid® Z (Dibutylzinndilaurat) wurde auf 0,2 Gew.-Teile verdoppelt um einen besserem Umsetzungsgrad zu erzielen.

| | |
|---|---|
| Dosierstrom Vorlage 1: | 3,238 kg/h |
| Dosierstom Vorlage 2: | 4,970 kg/h |
| Wärmetauscher 1: | 70°C |
| Wärmetauscher 2: | 70°C |
| Reaktoreintrittstemperatur: | 70°C |
| Reaktionsstrecke 1: | 70°C |
| Reaktionsstrecke 2: | 30°C |
| Reaktoraustrittstemperatur: | 165°C |

Es resultierte ein Produkt mit einem Rest-NCO-Gehalt von 2,2 %, einer Glasübergangstemperatur von 38,6°C, einem Restgehalt an freiem IPDI von 0,04 % und einem Gehalt an freiem Hydroxyprolylacrylat von 2,4 %. Während des gesamten Versuchsverlaufs waren starke Druckschwankungen im Reaktor zu beobachten, die eine ruhige kontinuierlich Fahrweise nicht ermöglichten. Trotz des höheren Katalysatoranteils ergeben sich keine geringeren NCO- und Hydroxypropylacrylat-Restgehalte.

### Reaktionsbedingungen 4.4)

Die Katalysatormenge an Desmorapid® Z (Dibutylzinndilaurat), wurde bei 0,2 Gew.-Teilen beibehalten, die Reaktorverweilzeit wurde durch die Verdoppelung der Dosiermengen halbiert, um geringere Druckschwankungen und bessere Umsetzungsgrade zu erzielen.

| | |
|---|---|
| Dosierstrom Vorlage 1: | 6,474 kg/h |
| Dosierstom Vorlage 2: | 9,940 kg/h |
| Wärmetauscher 1: | 70°C |
| Wärmetauscher 2: | 70°C |
| Reaktoreintrittstemperatur: | 70°C |
| Reaktionsstrecke 1: | 70°C |
| Reaktionsstrecke 2: | 30°C. |
| Reaktoraustrittstemperatur: | 188°C |

Es resultierte zunächst ein Produkt mit einem Rest-NCO-Gehalt von 1,2 %, einer Glasübergangstemperatur von 41,7°C, einem Restgehalt an freiem IPDI von 0,03 % und einem Gehalt an freiem 2-Hydroxyprolylacrylat von 2,6 %. Nach einer Reaktionszeit von ca. 2 Stunden erfolgte plötzlich ein starker Druckstoß und danach war der Reaktor vollständig zupolymerisiert.

### Fazit:

Die Herstellung eines ethylenisch ungesättigten Polyurethans ist mittels eines einstufigen, kontinuierlichen Prozesses nicht reproduzierbar möglich. Es entstehen Produkte mit relativ hohen Edukt-Restgehalten, insbesondere 2-Hydroxypropylacrylat, bei stark schwankenden Prozessparametern, insbesondere Druckschwankungen, im statischen Mischer.

## Patentansprüche

1. Verfahren zur lösemittelfreien Herstellung von ethylenisch ungesättigten Polyurethanen, **dadurch gekennzeichnet, dass** zunächst ein Präpolymer in einer diskontinuierlich geführten Reaktion aus einer isocyanathaltigen Komponente A) und einer isocyanatreaktiven Komponente B) hergestellt und anschließend in einer zweiten, kontinuierlich geführten Reaktion mit einer weiteren Komponente C) zum Polyurethan umgesetzt wird, wobei mindestens eine der Komponenten A, B oder C ethylenisch ungesättigte Gruppen aufweist und mindestens eine der Komponenten (B) oder (C) ein aliphatisches, araliphatisches oder aromatisches Diol oder Polyol ist, welches ausgewählt ist aus der Gruppe besthend aus 1,2-Ethandiol, 1,2- und 1,3-Propandiol, die isomeren Butandiole, Neopentylglycol, 1,6-Hexandiol, 2-Methylpropandiol-1,3, 2,2,4-Trimethylpentandiol-1,3, 2-n-Butyl-2-ethylpropandiol-1,3, Glycerinmonoalkanoate, Glycerinmonostearate, Dimerfettalkohole, Diethylenglycol, Triethylenglycol, Tetraethylenglycol, 1,4-Dimethylolcyclohexan, Dodekandiol, Bisphenol-A, hydriertes Bisphenol A, Hexandiol-1,3, Oktandiol-1,3, Dekandiol-1,3, 3-Methylpentandiol-1,5, 3,3-Dimethylbutandiol-1,2, 2-Methyl-pentandiol-1,3, 2-Methyl-pentandiol-2,4, 3-Hydroxymethyl-heptanol-4, 2-Hydroxymethyl-2,3-dimethylpentanol-1, Glycerin, Trimethylolethan, Trimethylolpropan, Trimerfettalkohole, isomere Hexantriole, Sorbit, Pentaerythrit, Ditrimethylolpropan, Dipentaerythrit, Diglycerin, Tricyclodekandiol, Perhydrobisphenol, 4,8-Bis-(hydro-xymethyl)-tricyclo[5.2.0(2.6)]-dekan, 2-Ethylhexandiol-1,3 und 1,4-Butandiol.

2. Verfahren gemäß Anspruch 1, **dadurch gekennzeichnet, dass** das Präpolymer isocyanatfunktionell ist.

3. Verfahren gemäß Anspruch 1, **dadurch gekennzeichnet, dass** das Präpolymer hydroxyfunktionell ist.

4. Verfahren gemäß Ansprüchen 1 bis 3, **dadurch gekennzeichnet, dass** das Präpolymer ethylenisch ungesättigte Gruppen enthält.

5. Verfahren gemäß Ansprüchen 1 bis 4, **dadurch gekennzeichnet, dass** das Präpolymer eine Viskosität kleiner 10 000 mPa·s bei 23° C hat.

6. Verfahren gemäß Anspruch 1, **dadurch gekennzeichnet, dass** das Polyurethan eine Viskosität von 10 bis 100 000 Pa·s bei 100°C hat.

7. Verfahren gemäß Anspruch 1, **dadurch gekennzeichnet, dass** das Polyurethan eine Viskosität von 100 bis 1 000 Pa·s bei 100°C hat.

8. Verfahren gemäß Anspruch 1, **dadurch gekennzeichnet, dass** das Polyurethan eine Glasübergangstemperatur zwischen 40 und 150°C hat.

9. Verfahren gemäß Anspruch 1, **dadurch gekennzeichnet, dass** das Polyurethan eine Glasübergangstemperatur zwischen 35 und 80°C hat.

10. Verfahren gemäß Anspruch 1, **dadurch gekennzeichnet, dass** die kontinuierliche Reaktion in einem statischen Mischer durchgeführt wird.

11. Verfahren gemäß Anspruch 1, **dadurch gekennzeichnet, dass** die kontinuierliche Reaktion bei Temperaturen von 50 bis 300°C durchgeführt wird.

12. Verfahren gemäß Anspruch 1, **dadurch gekennzeichnet, dass** die Reaktionspartner bei der kontinuierlichen Reaktion in der Reaktionszone Verweilzeiten zwischen 20 s und 30 min haben.

## Claims

1. Process for the solventless preparation of ethylenically unsaturated polyurethanes, **characterized in that** a prepolymer is first prepared from an isocyanate-containing component A) and an isocyanate-reactive component B) in a batch reaction, and then reacted with a further component C) in a second, continuous reaction to give the polyurethane, at least one of the components A, B and C having ethylenically unsaturated groups and at least one of the components B) and C) being an aliphatic, araliphatic or aromatic diol or polyol selected from the group comprising 1,2-ethanediol, 1,2- and 1,3-propanediol, the isomeric butanediols, neopentyl glycol, 1,6-hexanediol, 2-methyl-1,3-propanediol, 2,2,4-trimethyl-1,3-pentanediol, 2-n-butyl-2-ethyl-1,3-propanediol, glycerol monoalkanoates, glycerol monostearates, dimeric fatty alcohols, diethylene glycol, triethylene glycol, tetraethylene glycol, 1,4-dimethylolcyclohexane, dodecanediol, bisphenol A, hydrogenated bisphenol A, 1,3-hexanediol, 1,3-octanediol, 1,3-decanediol, 3-methyl-1,5-pentanediol, 3,3-dimethyl-1,2-butanediol, 2-methyl-1,3-pentanediol, 2-methyl-2,4-pentanediol, 3-hydroxymethyl-4-heptanol, 2-hydroxymethyl-2,3-dimethyl-1-pentanol, glycerol, trimethylolethane, trimethylolpropane, trimeric fatty alcohols, the isomeric hexanetriols, sorbitol, pentaerythritol, ditrimethylolpropane, dipentaerythritol, diglycerol, tricyclodecanediol, perhydrobisphenol, 4,8-bis(hydroxymethyl)tricyclo[5.2.0(2.6)]decane, 2-ethyl-1,3-hexanediol and 1,4-butanediol.

2. Process according to Claim 1, **characterized in that** the prepolymer has isocyanate groups.

3. Process according to Claim 1, **characterized in that** the prepolymer has hydroxyl groups.

4. Process according to Claims 1 to 3, **characterized in that** the prepolymer contains ethylenically unsaturated groups.

5. Process according to Claims 1 to 4, **characterized in that** the prepolymer has a viscosity below 10,000 mPa·s at 23°C.

6. Process according to Claim 1, **characterized in that** the polyurethane has a viscosity of 10 to 100,000 Pa·s at 100°C.

7. Process according to Claim 1, **characterized in that** the polyurethane has a viscosity of 100 to 1000 Pa·s at 100°C.

8. Process according to Claim 1, **characterized in that** the polyurethane has a glass transition temperature of between 40 and 150°C.

9. Process according to Claim 1, **characterized in that** the polyurethane has a glass transition temperature of between 35 and 80°C.

10. Process according to Claim 1, **characterized in that** the continuous reaction is carried out in a static mixer.

11. Process according to Claim 1, **characterized in that** the continuous reaction is carried out at temperatures of 50 to 300°C.

12. Process according to Claim 1, **characterized in that** the reactants in the continuous reaction have residence times in the reaction zone of between 20 s and 30 min.

## Revendications

1. Procédé de production sans solvant de polyuréthanes éthyléniquement insaturés **caractérisé en ce que,** d'abord, un prépolymère est produit dans une réaction conduite de manière discontinue à partir d'un composant contenant un ou des isocyanates A) et d'un composant réactif avec les isocyanates B) puis est converti en le polyuréthane dans une seconde réaction conduite de manière continue avec un autre composant C), où au moins l'un des composants A, B ou C comporte des groupes éthyléniquement insaturés et au moins l'un des composants (B) ou (C) est un diol ou polyol aliphatique, araliphatique ou aromatique qui est choisi dans le groupe consistant en le 1,2-éthanediol, le 1,2- et 1,3-propanediol, les butanediols isomères, le néopentylglycol, le 1,6-hexanediol, le 2-méthylpropanediol-1,3, le 2,2,4-triméthylpentanediol-1,3, le 2-n-butyl-2-éthylpropanediol-1,3, les monoalcanoates de glycérine, les monostéarates de glycérine, les alcools gras dimères, le diéthylèneglycol, le triéthylèneglycol, le tétraéthylèneglycol, le 1,4-diméthylolcyclohexane, le dodécanediol, le bisphénol-A, le bisphénol A hydrogéné, l'hexanediol-1,3, l'octanediol-1,3, le décanediol-1,3, le 3-méthylpentanediol-1,5, le 3,3-diméthylbutanediol-1,2, le 2-méthyl-pentanediol-1,3, le 2-méthyl-pentanediol-2,4, le 3-hydroxyméthyl-heptanol-4, le 2-hydroxyméthyl-2,3-diméthylpentanol-1, la glycérine, le triméthyloléthane, le triméthylolpropane, les alcools gras trimères, les hexanetriols isomères, le sorbitol, le pentaérythritol, le ditriméthylolpropane, le dipentaérythritol, la diglycérine, le tricyclodécanediol, le perhydrobisphénol, le 4,8-bis-(hydroxyméthyl)-tricyclo[5.2.0(2.6)]-décane, le 2-éthylhexanediol-1,3 et le 1,4-butanediol.

2. Procédé selon la revendication 1 **caractérisé en ce que** le prépolymère est isocyanato-fonctionnel.

3. Procédé selon la revendication 1 **caractérisé en ce que** le prépolymère est hydroxy-fonctionnel.

4. Procédé selon les revendications 1 à 3 **caractérisé en ce que** le prépolymère contient des groupes éthyléniquement insaturés.

5. Procédé selon les revendications 1 à 4 **caractérisé en ce que** le prépolymère a une viscosité inférieure à 10 000 mPa.s à 23°C.

6. Procédé selon la revendication 1 **caractérisé en ce que** le polyuréthane a une viscosité de 10 à 100 000 Pa.s à 100°C.

7. Procédé selon la revendication 1 **caractérisé en ce que** le polyuréthane a une viscosité de 100 à 1 000 Pa.s à 100°C.

8. Procédé selon la revendication 1 **caractérisé en ce que** le polyuréthane a une température de transition vitreuse entre 40 et 150°C.

9. Procédé selon la revendication 1 **caractérisé en ce que** le polyuréthane a une température de transition vitreuse entre 35 et 80°C.

10. Procédé selon la revendication 1 **caractérisé en ce que** la réaction continue est conduite dans un mélangeur statique.

11. Procédé selon la revendication 1 **caractérisé en ce que** la réaction continue est conduite à des températures de 50 à 300°C.

12. Procédé selon la revendication 1 **caractérisé en ce que** les partenaires réactionnels ont des temps de séjour entre 20 s et 30 min dans la zone de réaction lors de la réaction continue.
